(19)

Europäisches Patentamt

European Patent Office

Office européen des brevets

(11) EP 3 057 320 A1

(12) **EUROPEAN PATENT APPLICATION**

(43) Date of publication:
17.08.2016 Bulletin 2016/33

(51) Int Cl.:
H04N 19/117 (2014.01)   H04N 19/14 (2014.01)
H04N 19/182 (2014.01)   H04N 19/82 (2014.01)
H04N 19/86 (2014.01)   H04N 19/423 (2014.01)

(21) Application number: 16155745.9

(22) Date of filing: 15.02.2016

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **13.02.2015   US 201562115755 P
04.02.2016   US 201615015552**

(71) Applicant: **MediaTek, Inc
Hsin-Chu 300 (TW)**

(72) Inventors:
• **CHAO, Ping
115 Nangang Dist., Taipei City (TW)**
• **LIN, Huei-Min
302 Zhubei City, Hsinchu County (TW)**
• **WANG, Chih-Ming
302 Zhubei City, Hsinchu County (TW)**
• **CHANG, Yung-Chang
235 Zhonghe Dist., New Taipei City (TW)**

(74) Representative: **2K Patentanwälte Blasberg
Kewitz & Reichel
Partnerschaft mbB
Schumannstrasse 27
60325 Frankfurt am Main (DE)**

(54) **METHOD AND APPARATUS OF LOOP FILTERS FOR EFFICIENT HARDWARE IMPLEMENTATION**

(57)   A method and apparatus for loop filter processing of reconstructed video are disclosed. The sample adaptive offset (SAO) process is applied to DF (deblocking filter)-processed pixels of current image unit according to one or more SAO parameters. All or a part of pixels within SAO parameter boundary of current image unit share the same SAO parameters. SAO parameter boundary is shifted in horizontal and vertical directions according to a respective goal to reduce both line buffer requirement and parameter switching, where the vertical SAO parameter boundary of current image unit is shifted-left by xs lines from a vertical boundary of current image unit and the horizontal SAO parameter boundary of current image unit is shifted-up by ys lines from a horizontal boundary of current image unit. In order to reduce the requirement of line buffer, xs is always greater than m that corresponds to the number of pixels at each side of a horizontal edge modified by DF, ys is greater than or equal to 0.

*Fig. 9*

**Description**

**CROSS REFERENCE TO RELATED APPLICATIONS**

The present invention claims priority to U.S. Provisional Patent Application, Serial No. 62/115,755, filed February 13, 2015. The U.S. Provisional Patent Application is hereby incorporated by reference in its entirety.

**FIELD OF THE INVENTION**

The present invention relates to video coding system. In particular, the present invention relates to method and apparatus for reduction of Sample Adaptive Offset (SAO) and Adaptive Loop Filter (ALF) line buffers associated with video coding systems incorporating virtual boundary for SAO and ALF.

**BACKGROUND**

Motion estimation is an effective Inter-frame coding technique to exploit temporal redundancy in video sequences. Motion-compensated Inter-frame coding has been widely used in various international video coding standards The motion estimation adopted in various coding standards is often a block-based technique, where motion information such as coding mode and motion vector is determined for each macroblock or similar block configuration. In addition, Intra-coding is also adaptively applied, where the picture is processed without reference to any other picture. The Inter-predicted or Intra-predicted residues are usually further processed by transformation, quantization, and entropy coding to generate a compressed video bitstream. During the encoding process, coding artifacts are introduced, particularly in the quantization process. In order to alleviate the coding artifacts, additional processing has been applied to reconstructed video to enhance picture quality in newer coding systems. The additional processing is often configured in an in-loop operation so that the encoder and decoder may derive the same reference pictures to achieve improved system performance.

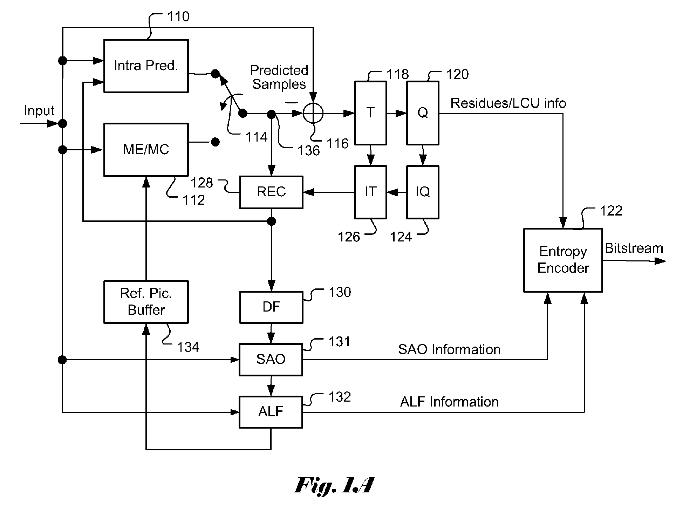

Fig. 1A illustrates an exemplary adaptive Inter/Intra video coding system incorporating in-loop processing. For Inter-prediction, Motion Estimation (ME)/Motion Compensation (MC) 112 is used to provide prediction data based on video data from other picture or pictures. Switch 114 selects Intra Prediction 110 or Inter-prediction data and the selected prediction data is supplied to Adder 116 to form prediction errors, also called residues. The prediction error is then processed by Transformation (T) 118 followed by Quantization (Q) 120. The transformed and quantized residues are then coded by Entropy Encoder 122 to form a video bitstream corresponding to the compressed video data. The bitstream associated with the transform coefficients is then packed with side information such as motion, mode, and other information associated with the image area. The side information may also be subject to entropy coding to reduce required bandwidth. Accordingly, the data associated with the side information are provided to Entropy Encoder 122 as shown in Fig. 1A. When an Inter-prediction mode is used, a reference picture or pictures have to be reconstructed at the encoder end as well. Consequently, the transformed and quantized residues are processed by Inverse Quantization (IQ) 124 and Inverse Transformation (IT) 126 to recover the residues. The residues are then added back to prediction data 136 at Reconstruction (REC) 128 to reconstruct video data. The reconstructed video data may be stored in Reference Picture Buffer 134 and used for prediction of other frames.

As shown in Fig. 1A, incoming video data undergoes a series of processing in the encoding system. The reconstructed video data from REC 128 may be subject to various impairments due to a series of processing. Accordingly, various in-loop processing is applied to the reconstructed video data before the reconstructed video data are stored in the Reference Picture Buffer134 in order to improve video quality. In the High Efficiency Video Coding (HEVC) standard being developed, Deblocking Filter (DF) 130, Sample Adaptive Offset (SAO) 131 and Adaptive Loop Filter (ALF) 132 have been developed to enhance picture quality. The in-loop filter information may have to be incorporated in the bitstream so that a decoder can properly recover the required information. Therefore, in-loop filter information from SAO and ALF is provided to Entropy Encoder 122 for incorporation into the bitstream. In Fig. 1A, DF 130 is applied to the reconstructed video first; SAO 131 is then applied to DF-processed video; and ALF 132 is applied to SAO-processed video. However, the processing order among DF, SAO and ALF can be re-arranged. The system in Fig. 1A may correspond to the High Efficiency Video Coding (HEVC) system (except for the ALF) or AVS2, which is a video coding standard developed by the Audio and Video Coding Standard Workgroup of China. The ALF process has been evaluated during HEVC development. However, ALF is not adopted in the current HEVC standard.

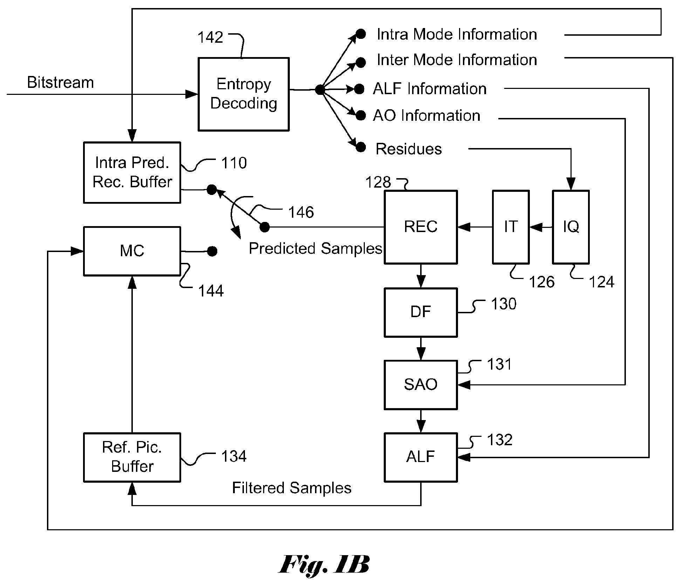

Fig. 1B illustrates a system block diagram of a corresponding video decoder including deblocking filter, sample adaptive offset and adaptive loop filter. Since the encoder also contains a local decoder for reconstructing the video data, some decoder components are already used in the encoder except for the entropy decoder 142. Furthermore, only motion compensation 144 is required for the decoder side. The switch 146 selects Intra-prediction or Inter-prediction and the selected prediction data are supplied to reconstruction (REC) 128 to be combined with recovered residues.

Besides performing entropy decoding on compressed video data, entropy decoding 142 is also responsible for entropy decoding of side information and provides the side information to respective blocks. For example, Intra mode information is provided to Intra-prediction 110, Inter mode information is provided to motion compensation 144, adaptive offset information is provided to SAO 131, adaptive loop filter information is provided to ALF 132 and residues are provided to inverse quantization 124. The residues are processed by IQ 124, IT 126 and subsequent reconstruction process to reconstruct the video data. Again, reconstructed video data from REC 128 undergo a series of processing including IQ 124 and IT 126 as shown in Fig. 1B and are subject to intensity shift. The reconstructed video data are further processed by DF 130, SAO 131 and ALF 132.

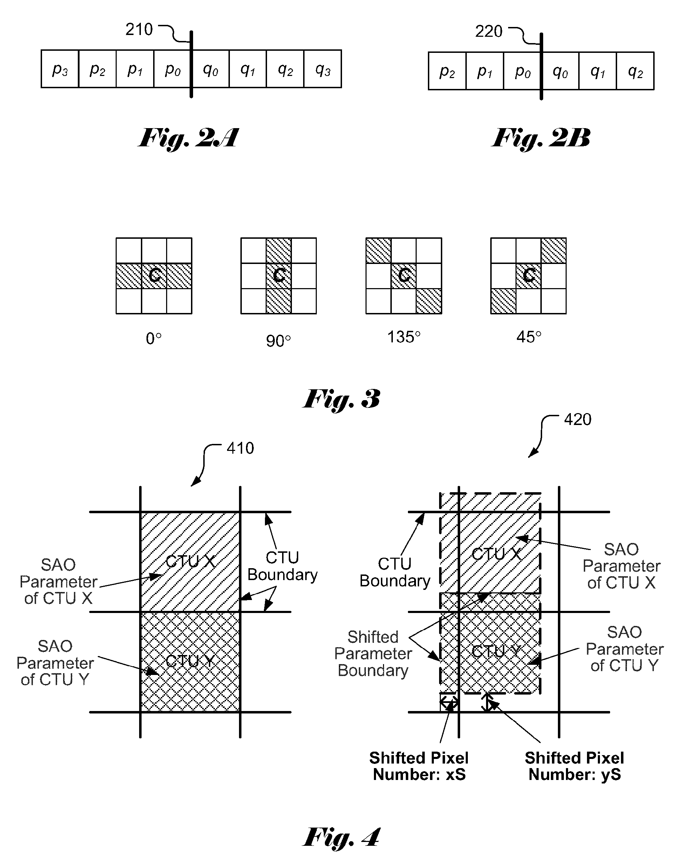

The coding process in HEVC is applied according to Largest Coding Unit (LCU), also called Coding Tree Unit (CTU). The LCU is adaptively partitioned into coding units using quadtree. In HEVC, the DF is applies to 8x8 block boundaries. For each 8x8 block, horizontal filtering across horizontal block boundaries is first applied, and then vertical filtering across horizontal block boundaries is applied. Fig. 2A illustrates an example of DF processing for the luma component in HEVC, where block boundary 210 with 4 boundary pixels on each side of the block boundary are involved. The boundary may correspond to a vertical boundary or a horizontal boundary. The boundary pixels are designated as q0, q1, q2 and q3, and p0, p1, p2 and p3, where q0 and p0 are two pixels immediately adjacent to the boundary. During processing of a luma block boundary, 4 pixels of each side are involved in filter parameter derivation, and up to 3 pixels on each side (i.e., p0, p1, p2 or q0, q1, q2) can be modified after filtering. For horizontal filtering across vertical block boundaries, unfiltered reconstructed pixels are used for filter parameter derivation and are used as source pixels for filtering. For vertical filtering across horizontal block boundaries, DF processed intermediate pixels (i.e. pixels after horizontal filtering) are used for filter parameter derivation and also used as source pixel for filtering. The DF processing for the chroma component in HEVC, 2 boundary pixels on each side of the block boundary are involved and only 1 pixel may be modified (i.e., p0 or q0).

Fig. 2B illustrates an example of DF processing for the luma component in AVS2, where block boundary 220 with 3 boundary pixels on each side of the block boundary are involved. The boundary pixels are designated as q0, q1 and q2, and p0, p1 and p2, where q0 and p0 are two pixels immediately adjacent to the boundary. For DF processing of a chroma block boundary, two pixels of each side are involved in filter parameter derivation. For AVS2, the DF processing may modify all involved boundary pixels. In other words, 3 luma pixels and 2 chroma pixels on each size of the block boundary may be modified.

Sample adaptive offset (SAO) types according to HEVC and AVS2 are shown in Fig. 3, where four SAO types are used corresponding to four orientations at 0°, 90°, 135°, and 45°. SAO is a per-pixel in-loop filtering. SAO parameters are updated for each LCU or CTU. For SAO orientation type, pixel classification is first done to classify pixels into different groups (also called categories or classes) as according to the classification conditions shown in Table 1. After classification, each reconstructed and DF processed pixel is compensated by an offset value based on the orientation type selected and the classification result.

**Table 1.**

| Category | Condition |
|----------|-----------|
| 1 | C < two neighbors |
| 2 | C < one neighbor && C == one neighbor |
| 3 | C > one neighbor && C == one neighbor |
| 4 | C > two neighbors |
| 0 | None of the above |

The conditions for the SAO classification as shown in Table 1 can be implemented by comparing the center pixel with two neighboring pixels individually. The conditions for classification checks whether the center pixel is greater than, smaller than or equal to one of the neighboring pixels. The three comparison results may be represented by a 2-bit data for each comparison result.

The SAO parameters such as pixel offset values and SAO types can be determined adaptively for each CTU. For HEVC, the SAO parameter boundary is the same as the CTU boundary. Within the parameter boundary, SAO process for all pixels share the same SAO types and offset values. Since SAO is applied to DF processed pixels, the SAO process for a current CTU has to wait for the DF process to complete for the current CTU. However, the pixels around the CTU boundary cannot be processed by DF until the reconstructed video data around the CTU boundary on the other side of the CTU boundary are ready. Due to such data dependency, AVS2 adopted shifted SAO parameter boundaries. Fig. 4 illustrates an example of SAO parameter boundary shift according to the AVS2 standard. The SAO parameter boundary example 410 corresponds to the HEVC case, where the SAO parameter boundary is aligned with the CTU boundary. The SAO parameter boundary 420 corresponds to the AVS2 case, where the SAO parameter boundary is shifted left and up with respect to the CTU boundary by xS and yS respectively. In particular, AVS2 uses xS=4 and yS=4.

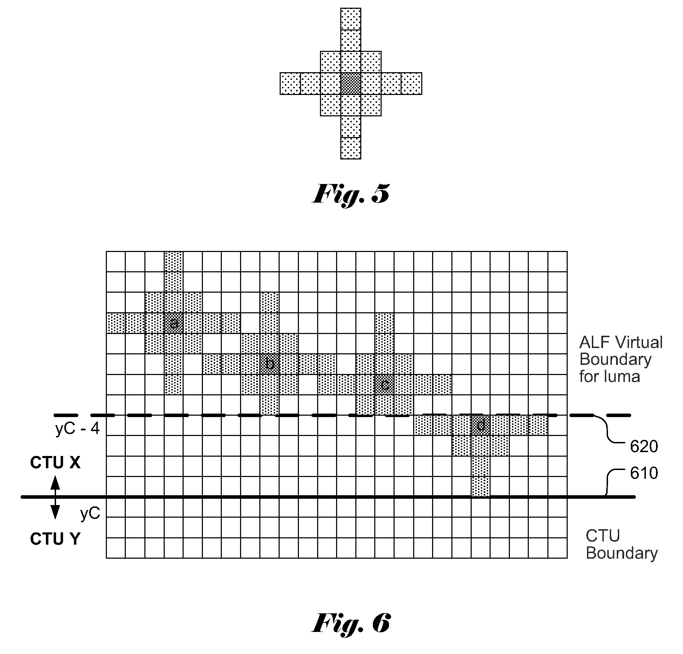

Adaptive Loop Filtering (ALF) 132 is a video coding tool to enhance picture quality. ALF has been evaluated during the development stage of HEVC. However, ALF is not adopted in the current HEVC standard. Nevertheless, it is being incorporated into AVS2. In particular, a 17-tap symmetric ALF filter is being used for AVS2 as shown in Fig. 5. The 17-tap symmetric ALF filter implies that the filter operation for a current pixel may require data from 3 following lines. When these lines are from another CTU, particular the CTU in a following CTU row, the ALF process has to be delayed till the following related data are available. This implies the need for line buffer to temporarily store the related data in the current CTU for later processing. In order to overcome this data dependency issue, AVS2 adopts ALF virtual boundary to restrict ALF processing not to cross the virtual boundary. Fig. 6 illustrates an example of ALF virtual boundary for the luma component according to AVS2, where the ALF processing for selected pixels (i.e., a, b, c and d) are shown. Line 610 represents the CTU boundary between CTU X and CTU Y. Line 620 represents the luma ALF virtual boundary, which is located at 4 lines (i.e., yC-4) above the CTU boundary (i.e., yC) according to AVS2. For the chroma component, the ALF virtual boundary is located 3 lines (i.e., yC-3) above the CTU boundary according to AVS2 (*Information Technology - Advanced Media Coding Part2: Video Final Committee Draft,* Audio and Video Coding Standard Workgroup of China, Feb. 7, 2015, Document: N2120.D3). For pixels a, b and c, the ALF process is applied during the CTU X processing stage. Furthermore, the ALF process for pixels a, b and c only uses information above the virtual boundary. For pixel d below the virtual boundary, the ALF process is applied during the CTU Y processing stage and only uses information below the virtual boundary. The use of virtual boundary to restrict data dependency can help to reduce the requirement on the line buffer capacity.

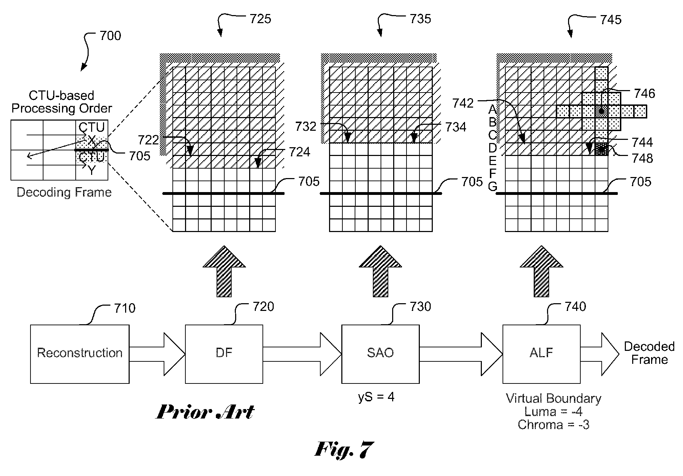

As mentioned above, the DF, SAO and ALF process involves neighboring data. In HEVC and AVS2, CTU has been used as a unit for coding process. When the DF, SAO and ALF processes are applied to data across a CTU boundary, the data dependency has to be managed carefully to minimize line buffer. Since the DF, SAO and ALF processes are applied to each CTU sequentially, the corresponding hardware implementation may be arranged in a pipeline fashion. Fig. 7 illustrates an example of data dependency associated with the DF, SAO and ALF processes for an AVS2 decoder. The CTU based processing order 700 is shown in Fig. 7 and the CTU boundary between CTU X and CTU Y is indicated by reference number 705. As shown in Fig. 7, the reconstructed video from reconstruction block 710 is processed by DF 720, SAO 730 and ALF 740. The output from ALF 740 is stored in a decoded frame buffer.

The processing status for corresponding DF 720, SAO 730 and ALF 740 processes are indicated by respective reference numbers 725, 735 and 745. Diagram 725 illustrates the DF processing status at the end ofDF processing stage for CTU X. Luma pixels above line 722 and chroma pixels above line 724 are DF processed. Luma pixels below line 722 and chroma pixels below line 732 cannot be processed during DF processing stage for CTU X since involved pixels on the other side of block boundary (i.e., below CTU boundary 705) are not available yet. Diagram 735 illustrates the SAO processing status at the end of SAO processing stage for CTU X. Luma pixels above line 732 and chroma pixels above line 734 are SAO processed, where line 732 and line 734 are aligned. Diagram 745 illustrates the ALF processing status at the end of ALF processing stage the CTU X. Again, the luma pixels below line 732 and the chroma pixels below line 734 cannot be processed by SAO for CTU X yet since it involves SAO parameter signaled in the CTU Y, which is not yet processed by VLD. Luma pixels above line 742 (luma ALF virtual boundary) are ALF processed according to the AVS2 draft standard. Chroma pixels above line 744 (chroma ALF virtual boundary) would be ALF processed. Nevertheless, the ALF process for the chroma component cannot be performed for chroma lines A through D during the CTU X processing stage. For example, the ALF process for pixel 746 will use pixel 748. Since chromapixel 748 is below the chroma SAO parameter boundary 734, chroma pixel 748 is not SAO processed yet for the CTU X processing stage. Therefore, even though it is above the chroma ALF virtual boundary, chroma pixel 746 cannot be ALF processed. Accordingly, 6 lines of chroma SAO processed lines above pixel 748 (i.e., above line D) have to be stored in buffer for later ALF process on lines A through D during the CTU Y processing stage, wherein the three lines above line A have been ALF processed in the CTU X processing stage, but also being required by the ALF process on line A.

For hardware based implementation, the 6 lines of chroma samples with picture width have to be stored in line buffer, which is usually implemented using embedded memory and such implementation would result in high chip cost. Therefore, it is desirable to develop a method and apparatus that can reduce the required line buffer associated with in-loop filtering processes, such as DF, SAO, ALF, any other in-loop filtering process or combination thereof. Furthermore, for different SAO parameter boundaries, the system will switch between different SAO parameters. This will increase system complexity and power consumption. Therefore, it is desirable to develop in-loop filtering processes, such as DF, SAO, ALF , any other in-loop filtering process, or combination thereof, with proper system parameter design to reduce line buffer requirement, system complexity, system power consumption, or any combination thereof. In yet another aspect, it is desirable to develop method and apparatus for performance and cost efficient loop filter processing including DF, SAO and ALF for any video coding system incorporating such loop filter processing.

## BRIEF SUMMARY OF THE INVENTION

It is an object of the present invention to provide an enhanced method for loop filter processing of reconstructed video data for a video coding system, enabling reduced line buffer requirements, system complexity and system power consumption. It is a further object of the present invention to provide a corresponding apparatus for loop filter processing of reconstructed video data for a video coding system.

These problems are solved by a method for loop filter processing of reconstructed video data for a video coding system as claimed by claim 1, and by an apparatus for loop filter processing of reconstructed video data for a video coding system as claimed by claim 14. Further advantageous embodiments are the subject-matter of the dependent claims.

A method and apparatus for loop filter processing of reconstructed video are disclosed. In order to reduce both the computational complexity of SAO parameter switching and the requirement of line buffer, the present invention manipulates SAO parameter boundary by shifting it in horizontal and vertical directions according to a respective goal. According to the present invention, deblocking filter (DF) process is first applied to reconstructed pixels, where DF processing modifies up to m pixels at each side of a horizontal edge corresponding to an image unit boundary between two image units. The sample adaptive offset (SAO) process is applied to DF-processed pixels of current image unit according to one or more SAO parameters. All or a part of pixels within SAO parameter boundary of current image unit share the same SAO parameters. The vertical SAO parameter boundary of current image unit is shifted-left by xs lines from a vertical boundary of current image unit and the horizontal SAO parameter boundary of current image unit is shifted-up by ys lines from a horizontal boundary of current image unit. The spatial-loop-filter process is then applied to SAO-processed pixels above a spatial-loop-filter restricted boundary of current image unit according to one or morespatial-loop-filter parameters. The spatial-loop-filter restricted boundary of current image unit is shifted-up by yv lines from the bottom boundary of current image unit. In order to reduce the requirement of line buffer, m, xs, ys, and yv are set to positive integers, xs is always greater than m, ys is greater than or equal to 0, ys is always smaller than yv, and yv is determined according to m.

Each image unit may correspond to a coding tree unit (CTU). The spatial-loop-filter process may correspond to adaptive loop filter (ALF) process.

If the reconstructed video data comprises a luma component and a chroma component, the DF process, the SAO process, and the spatial-loop-filter process are applied to the luma component and chroma component separately with individual m denoted as M and N, individual xs denoted as xS and xSC, individual ys denoted as yS and ySC, and individual yv denoted as yV and yVC respectively. In one embodiment, yS and ySC can be equal to 0. yV can be greater than M and yVC can be greater than N, such as yV = (M+1) and yVC = (N+1). In one example, M is equal to 3 and N is equal to 2.

In another embodiment, yS is equal to ySC, yV is equal to yVC, and yVC is greater than MAX(M,N). For example, yV and yVC are equal to MAX(M,N)+1, and yS and ySC can be an integer from 0 to MAX(M,N). In one example, M is equal to 3 and N is equal to 2.

In yet another embodiment, the sign data generated from comparing a current pixel in a current line processed during a current processing stage for the current image unit with a neighboring pixel in an adjacent line to be processed during in a subsequent processing stage are stored. Each sign data corresponds to "greater than", "less than" or "equal to". Each sign data can be stored in 2 bits.

## BRIEF DESCRIPTION OF THE DRAWINGS

Fig. 1A   illustrates an exemplary adaptive inter/intra video encoding system incorporating loop filters including Deblocking Filter (DF), Sample Adaptive Offset (SAO) and Adaptive Loop Filter (ALF) for reconstructed video data.

Fig. 1B   illustrates a system block diagram of a corresponding video decoder including deblocking filter, sample adaptive offset and adaptive loop filter.

Fig. 2A   illustrates pixels on both sides of a block boundary involved with the Deblocking Filter process for the luma component according to HEVC.

Fig. 2B   illustrates pixels on both sides of a block boundary involved with the Deblocking Filter process for the luma component according to AVS2.

Fig. 3     illustrates pixel classification based on a 3x3 window, with four orientation types corresponding to 0°, 90°, 135°, and 45°.

Fig. 4     illustrates an example of SAO parameter boundary shift according to the AVS2 standard.

Fig. 5     illustrates the 17-tap symmetric ALF filter adopted by AVS2.

Fig. 6     illustrates an example of ALF virtual boundary for the luma component according to AVS2.

Fig. 7     illustrates an example of data dependency associated with the DF, SAO and ALF processes for an AVS2 decoder.

Fig. 8     illustrates an example of the processing status for DF, SAO and ALF processes with loop filter related boundary parameters labeled.

Fig. 9     illustrates an example of SAO processing with different horizontal SAO parameter boundary and horizontal SAO processing boundary according to the present invention.

Fig. 10     illustrates an example of the processing status for corresponding DF, SAO and ALF processes at the end of a current CTU processing stage according to the first embodiment of the present invention.

Fig. 11     illustrates an example of the processing status for corresponding DF, SAO and ALF processes at the end of a current CTU processing stage according to the second embodiment of the present invention.

Fig. 12     illustrates an exemplary flowchart for a coding system incorporating an embodiment of the present invention, where the system aligns loop filter related boundaries to reduce line buffer requirement.

## DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

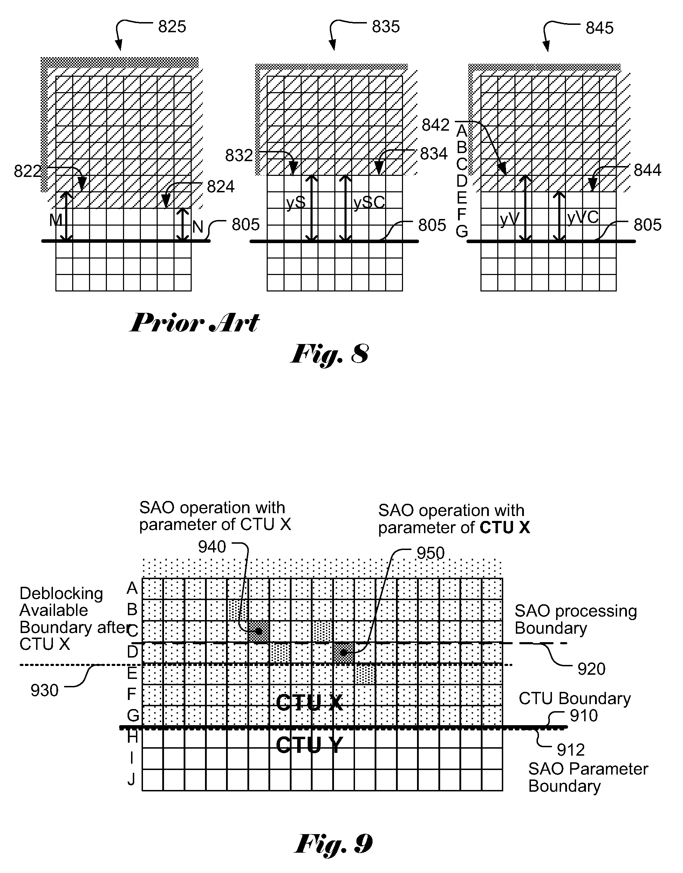

For the convenience to discuss the data dependence between different loop processing stages, loop filter related boundary parameters are introduced in this disclosure. The processing status for DF, SAO and ALF processes in Fig. 7 are repeated in Fig. 8 with loop filter related boundary parameters labeled. The processing status for corresponding DF, SAO and ALF processes are indicated by respective reference numbers 825, 835 and 845. Diagram 825 illustrates the DF processing status at the end of DF processing stage for CTU X. Luma pixels above line 822 (i.e., luma DF boundary) and chroma pixels above line 824 (i.e., chroma DF boundary) are DF processed. M indicates the maximum number of luma pixels and N indicates the maximum number of chroma pixels on each side of the block boundary that can be updated by the DF process. In Fig. 8, CTU boundary 805 is also a block boundary.

Diagram 835 illustrates the SAO processing status at the end of SAO processing stage for CTU X. Luma pixels above line 832 (i.e., luma SAO parameter boundary) and chroma pixels above line 834 (i.e., chroma SAO parameter boundary) are SAO processed, where line 832 and line 834 are aligned due to the SAO parameter boundary shift proposed in AVS2 standard. In order to avoid SAO parameter switching in the processing stage of each CTU, SAO parameter boundary is shifted by $(xS, yS)$ for the luma component and $(xSC, ySC)$ for the chroma component. In other words, for a CTU with top-left point $(xC, yC)$, the top boundary of SAO parameter is shifted to $(yC - yS)$ for the luma component and shifted to $(yC - ySC)$ for the chroma component as indicated in Fig. 8. Similarly, SAO parameter boundary shift is also applied to the x-direction. Originally, SAO parameters are determined based on CTU in the HEVC standard. In the conventional approach, to reduce the computational complexity of SAO parameter switching, the SAO parameters are determined based on the pixels that are DF processed and ready for SAO processing. In other words, the SAO parameter boundary according to the conventional approach is the same as the DF processed pixel boundary ready for SAO processing. The DF processed pixel boundary ready for SAO processing is referred as a *SAO processing boundary*.

Diagram 845 illustrates the ALF processing status at the end of ALF processing stage for CTU X. Luma pixels above line 842 (i.e., luma ALF virtual boundary) are SAO processed. Chroma pixels above line 844 (i.e., chroma ALF virtual boundary) would be ALF processed. Nevertheless, the ALF process for the chroma component cannot be performed for chroma line D during the CTU X processing stage. ALF virtual boundary is $(yC - yV)$ for the luma component and $(yC - yVC)$ for the chroma component, where $yV$ and $yVC$ correspond to the boundary vertical shifts for the luma and chroma components respectively. For the AVS2 standard, the number (i.e., M and N) of boundary pixels to be updated are 3 and 2 for the luma and chroma components respectively. The SAO parameter boundary vertical offsets correspond to 4 for both luma and chroma components. On the other hand, the vertical shifts for the ALF virtual boundaries (i.e., yV and yVC) are 4 and 3 for the luma and chroma components respectively.

In order tosimultaneously reduce the size requirement of line buffer and the computational complexity of SAO parameter switching during processing stage of a CTU, a method to manipulate SAO parameter boundary by shifting it in horizontal and vertical directions according to a respective goalis disclosed, which has different SAO parameter boundary and SAO processing boundary. As mentioned above, in the conventional approach, the SAO parameter boundary and SAO processing boundary are always the same. According to the present invention, vertical SAO parameter boundary keeps equal to the SAO processing boundary, but the horizontal SAO parameter boundary can be different from the SAO processing boundary. In particular, the SAO processing boundary is selected according to the locations of DF processed pixel data. Fig. 9 illustrates an example of different horizontal SAO parameter and processing boundaries according to the present invention. In this example, the horizontal SAO parameter boundary 912 is the same as the CTU horizontal boundary 910. On the other hand, the horizontal SAO processing boundary 920 is located at 1 line above the deblocking boundary 930. For pixel 940 above the horizontal SAO processing boundary 920, the SAO processing is based on the SAO parameters within (i.e., above) the SAO parameter boundary for CTU X. However, for pixel 950 in line D, the SAO processing is also based on SAO parameter for CTU X according to the present invention since pixel 950 is within (i.e., above) the horizontal SAO processing boundary 920. For the conventional SAO processing, pixel 950 in line D is SAO processed based on SAO parameter for CTU Y.

In the above discussion, an image is partitioned into CTUs and each CTU is partitioned into one or more coding units (CUs). The DF, SAO and ALF processes are applied to block boundaries to reduce artifacts at or near block boundaries. For a coding system that the CTUs are processed in a horizontal scan order, the DF, SAO and ALF processes at CTU boundaries, which are also block boundaries, will require line buffers to store information across CTU row boundaries. However, the image may also be partitioned into other image units, such as macroblock or tile, for coding process. The line buffer issue associated with CTU boundaries also exists in image unit boundaries.

While ALF filter is used as an example in the above illustration, the present invention is applicable to any *spatial loop filter.* For example, a two-dimensional FIR (finite impulse response) filter with as set of spatial loop filter parameters can be used to replace the ALF. In order to reduce line buffer requirement associated with the spatial loop filter processing, a *restricted spatial loop filter boundary* can be used to restrict the spatial loop filter processing to use only SAO processed data within the restricted spatial loop filter boundary. For example, the restricted spatial loop filter boundary can be located aty lines above the CTU boundary. The spatial loop filter will be applied to the SAO processed pixels above the restricted spatial loop filter boundary and will only use the SAO processed pixels above the restricted spatial loop filter boundary as input to the spatial loop filter.

Fig. 9 is intended to illustrate an example of the present invention, where the horizontal SAO parameter boundary 912 does not have to be the same as the CTU horizontal boundary 910. According to the present invention, the horizontal SAO parameter boundary 912 can be anywhere starting from the CTU horizontal boundary 910 up to 1 line below the horizontal SAO processing boundary 920. For pixels located below the horizontal SAO processing boundary 920 in CTU X, SAO parameter information needed for SAO processing may have to be buffered since the SAO operation for pixels in this region is based on SAO parameter information of CTU X. However, in the HEVC and AVS2 standard, SAO parameter can be coded in merge-up or merge-left syntax, which also needs to buffer SAO parameter for a whole CTU row, so the storage for SAO parameter can be shared.

The present invention can be applied to the luma component and the chroma component if the underlying video data corresponds to color video data. In the first embodiment, the vertical offsets yS and ySC of the horizontal SAO parameter boundary, and the vertical offsets yV and yVC of the ALF virtual boundary are determined according to:

$$0 \le yS < yV = M+1, \text{ and} \tag{1}$$

$$0 \le ySC < yVC = N+1 \tag{2}$$

The major impact on line buffer requirement is due to the storage requirement for boundary loop filter processing from one CTU row to the next CTU row. Since a picture may be very wide, the corresponding line buffer size may be very large. Therefore, a goal of the present invention is to reduce the line buffer requirement for loop filter processing across CTU boundary between two CTU rows. For boundary offsets for the vertical boundaries, the impact on line buffer requirement is very small if any. The SAO parameter boundary horizontal offset xS and xSC for the luma and chroma components keeps the same as the convention case, i.e., xS = M+1 and xSC = N+1. In case that a system processes picture in a vertical scan order, the CTU columns will be treated as if they were CTU row.

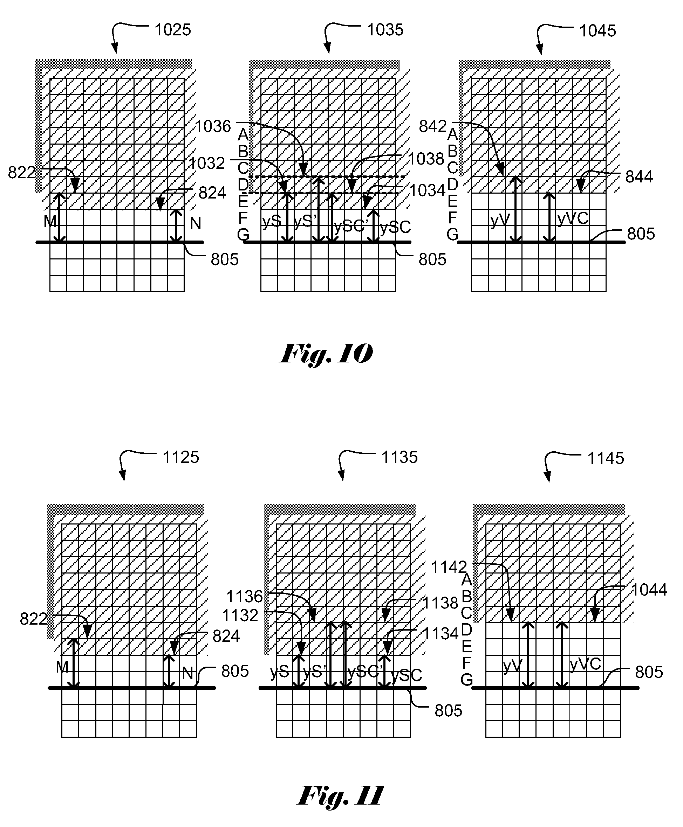

Fig. 10 illustrates an example according to this embodiment, where M=3, N=2, yS=3, ySC=2, yV=4 and yVC=3. The processing status for corresponding DF, SAO and ALF processes are indicated by respective reference numbers 1025, 1035 and 1045. Some of the loop processing boundaries are the same as those in Fig. 8. In Fig. 10, the same reference numbers as Fig. 8 may be used to indicate the same loop processing boundaries. Fig. 10 also indicates the SAO processing boundaries for the luma and chroma components, where the SAO processing vertical offset for the luma component (vS') is 4 and the SAO processing vertical offset for the chroma component (vSC') is 3. As shown in Fig. 10, the SAO parameter boundaries 1032 and 1034 for the luma and chroma components are located at 1 line below the respective SAO processing boundaries 1036 and 1038.

The offset of the SAO parameter boundary in the horizontal direction is always the same as SAO processing boundary. For example, the horizontal offsets xS and xSC of the SAO parameter boundary for the luma and chroma components is the same as the offsets of the SAO processing boundaries in the horizontal direction.

In the second embodiment, the SAO parameter boundary vertical offsets yS and ySC, and the ALF virtual boundary vertical offsets yV and yVC are determined according to:

$$0 \le yS = ySC < yV = yVC = MAX(M,N) + 1 \tag{3}$$

In other words, the SAO parameter boundaries for the luma and chroma components are the same in order to favor a regular memory access behavior. The ALF virtual boundaries for the luma and chroma components are also the same. Furthermore, the ALF virtual boundaries are at least 1 line above the respective SAO parameter boundaries.

Fig. 11 illustrates an example according to this embodiment, where M=3, N=2, yS= ySC=2, and yV=yVC=4. The processing status for corresponding DF, SAO and ALF processes are indicated by respective reference numbers 1125, 1135 and 1145. Some of the loop processing boundaries are the same as those in Fig. 8. In Fig. 11, the same reference numbers as Fig. 8 may be used to indicate the same loop processing boundaries. In Fig. 11, it also indicates the SAO processing boundaries for the luma and chroma components, where the SAO processing boundary vertical offsets for the luma and chroma components (vS' and vSC') are equal to 4. As shown in Fig. 11, the SAO parameter boundaries 1132 and 1134 for the luma and chroma components are located at 2 lines below the respective SAO processing boundaries 1136 and 1138. The ALF virtual boundaries 1142 and 1144 for the luma and chroma components are also indicated.

The SAO parameter boundary in the horizontal direction is always the same as the SAO processing boundary in the horizontal direction. For example, the SAO parameter boundary horizontal offsets xS and xSC for the luma and chroma components may be set to xS=xSC=MAX(M,N)+1.

During the SAO processing, the pixel data within current CTU processing boundaries may be used for later SAO processing. For example, the line D in Fig. 9 will be processed in the pipeline stage for CTU Y. The SAO processing on line D will need data in line C that are processed in SAO processing stage for CTU X. As mentioned before, the SAO classification process compares the center pixel value with two individual neighboring pixels. The comparison determines whether the center pixel is larger than, smaller than or equal to one selected neighboring pixel. Accordingly, the SAO operation module can pre-process the comparison operation between line C and line D and store the results (i.e., ">", "<" or "="). The comparison results are already available when line C was SAO processed at the pipeline stage for CTU X, since line D will be SAO processed with the same SAO parameter as line C due to the non-aligned SAO parameter boundary and processing boundary.

The result of the comparison between a pixel line C and a neighboring pixel line D can be represented by a 2-bit data for each pixel to indicate one of the three comparison results. The 2-bit sign data is much smaller than storing a whole pixel, which is typically 8 bits or more. Accordingly, the cost of the line buffer can be substantially reduced.

The loop filter processing boundary design as disclosed above can be used to overcome the large line buffer requirement issue due to data dependency in coding systems, such as AVS2 system, utilizing loop filters including DF, SAO and ALF. The present invention is also applicable to any advanced video coding systems incorporating DF, SAO and ALF.

Table 2 compares the line buffer requirement among the conventional AVS2 standard and the embodiments of the present invention. As mentioned before, all above implementations require 3 lines for each of the luma and chroma components to store data for deblocking filter. For SAO processing, all systems require to store line D and Line C data for each of the luma and chroma components. However, instead of storing pixel data for line C, comparison results between line C and line D can be stored to reduce storage requirement. As mentioned before, only 2 bits are required to store each comparison results. According to the conventional AVS2 approach, 6 lines of SAO results would be stored for ALF processing on the chroma component. Systems incorporating any embodiment of the present invention can remove the need for these 6 lines of buffer for ALF processing of the chroma component. The total numbers of lines required for DF, SAO and ALF are 16, 7.5 and 8.5 for the conventional AVS2, the first embodiment, and the second embodiment, where both embodiments achieve additional memory saving by storing the signs for comparison results involved in the SAO processing.In other words, the first and second embodiments can reduce the line buffer requirement by 8.5 and 7.5 lines.

**Table 2.**

|  | Conventional: ALF Chroma virtual boundary = yC-3, SAO_SHIFT_PIX_NUM = 4 | First Embodiment (Fig. 9) | Second Embodiment (Fig. 10) |
|---|---|---|---|
| Deblocking Filter | Y: 3 C: 3 | Y: 3 C: 3 | Y: 3 C: 3 |
| SAO (DF result) | Y: 2 C: 2 | Y: 1.25 C: 0.25 | Y: 1.25 C: 1.25 |
| ALF (SAO result) | Y: 0 C: 6 | Y: 0 C: 0 | Y: 0 C: 0 |
| Total lines for line buffer | 16 | 7.5 | 8.5 |
| DRAM Efficiency | Bad | Normal | Good |
| Hardware Cost | High | Low | Low |

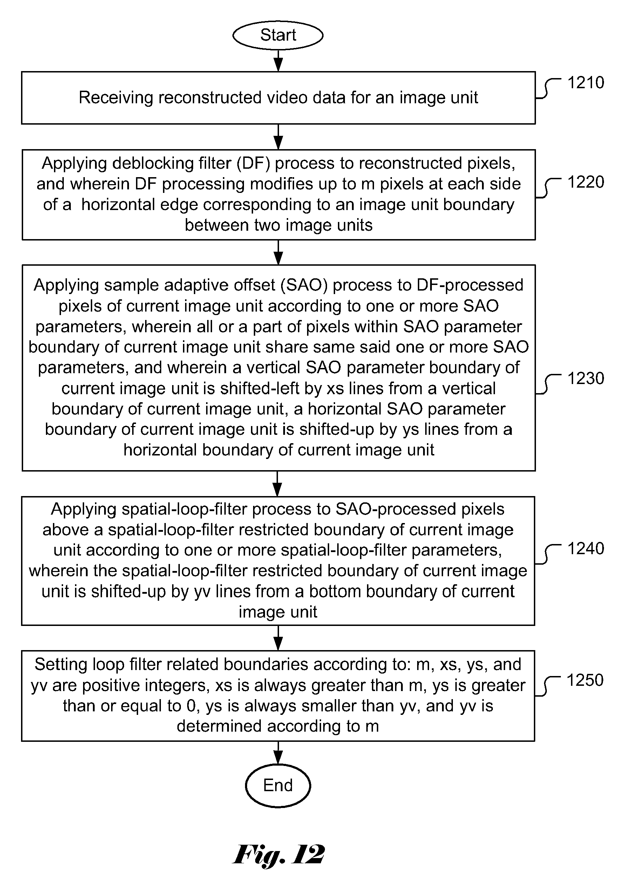

Fig. 12 illustrates an exemplary flowchart for a coding system incorporating an embodiment of the present invention, where the system aligns loop filter related boundaries to reduce line buffer requirement. The system receives reconstructed video data for an image unit as shown in step 1210. The reconstructed video data may be retrieved from memory (e.g., computer memory, buffer (RAM or DRAM) or other media) or from a processor. Deblocking filter (DF) process is then applied to reconstructed pixels in step 1220. The DF processing modifies up to up to m pixels at each side of a horizontal edge corresponding to an image unit boundary between two image units. Sample adaptive offset (SAO) process is applied to DF-processed pixels of current image unit according to one or more SAO parameters in step 1230. All or a part of pixels within SAO parameter boundary of current image unitshare same said one or more SAO parameters.Thevertical SAO parameter boundary of current image unit is shifted-left by xs lines from a vertical boundary of current image unit and the horizontal SAO parameter boundary of current image unit is shifted-up by ys lines from a horizontal boundary of current image unit. Spatial-loop-filter process is applied to SAO-processed pixels above a spatial-loop-filterrestricted boundary of current image unit according to one or morespatial-loop-filter parameters in step 1240, where the spatial-loop-filterrestricted boundary of current image unit is shifted-up by yv lines from a bottom boundary of current image unit. In order to reduce the line buffer requirement and/or reduce loop filter processing switching, the loop filter related boundaries are set according to: m, xs, ys, and yv are positive integers, xs is always greater than m, ys is greater than or equal to 0, ys is always smaller than yv, and yvis determined according to m as shown in step 1250.

The flowchart shown above is intended to illustrate examples of loop filter processing according to the present invention. A person skilled in the art may modify each step, re-arranges the steps, split a step, or combine steps to practice the present invention without departing from the spirit of the present invention. In the disclosure, specific syntax and semantics have been used to illustrate examples to implement embodiments of the present invention. A skilled person may practice the present invention by substituting the syntax and semantics with equivalent syntax and semantics without departing from the spirit of the present invention.

The above description is presented to enable a person of ordinary skill in the art to practice the present invention as provided in the context of a particular application and its requirement. Various modifications to the described embodiments will be apparent to those with skill in the art, and the general principles defined herein may be applied to other embodiments. Therefore, the present invention is not intended to be limited to the particular embodiments shown and described, but is to be accorded the widest scope consistent with the principles and novel features herein disclosed. In the above detailed description, various specific details are illustrated in order to provide a thorough understanding of the present invention. Nevertheless, it will be understood by those skilled in the art that the present invention may be practiced.

Embodiment of the present invention as described above may be implemented in various hardware, software codes, or a combination of both. For example, an embodiment of the present invention can be one or more electronic circuits integrated into a video compression chip or program code integrated into video compression software to perform the processing described herein. An embodiment of the present invention may also be program code to be executed on a Digital Signal Processor (DSP) to perform the processing described herein. The invention may also involve a number of functions to be performed by a computer processor, a digital signal processor, a microprocessor, or field programmable gate array (FPGA). These processors can be configured to perform particular tasks according to the invention, by executing machine-readable software code or firmware code that defines the particular methods embodied by the invention. The software code or firmware code may be developed in different programming languages and different formats or styles. The software code may also be compiled for different target platforms. However, different code formats, styles and languages of software codes and other means of configuring code to perform the tasks in accordance with the invention will not depart from the spirit and scope of the invention.

Furthermore, the present application may claim the following embodiments, referring to the embodiment of claim 14:

17. The apparatus of any of embodiment 16, wherein yS and ySC are equal to 0.

18. The apparatus of embodiment 17 or 18, wherein yV is greater than M and yVC is greater than N.

19. The apparatus of embodiment 17 or 18, wherein yV is equal to (M+1) and yVC is equal to (N+1).

20. The apparatus of embodiment 19, wherein M is equal to 3 and N is equal to 2.

21. The apparatus of any of embodiments 17 to 20, wherein yS is equal to ySC, yVis equal to yVC, and yVC is greater than MAX(M,N).

22. The apparatus of embodiment 21, wherein yV and yVC are equal to MAX(M,N)+1.

23. The apparatus of embodiment 22, wherein M is equal to 3 and N is equal to 2.

24. The apparatus of any of claims 14 to 23, wherein sign data is stored and the sign data is generated from comparing a current pixel in a current line processed during a current processing stage for the current image unit with a neighboring pixel in an adjacent line to be processed during in a subsequent processing stage, wherein each sign data corresponds to "greater than", "less than" or "equal to".

25. The apparatus of any of embodiments 14 to 24, wherein each sign data is stored in 2 bits.

The invention may be embodied in other specific forms without departing from its spirit or essential characteristics. The described examples are to be considered in all respects only as illustrative and not restrictive. The scope of the invention is therefore, indicated by the appended claims rather than by the foregoing description. All changes which come within the meaning and range of equivalency of the claims are to be embraced within their scope.

**Claims**

1. A method for loop filter processing of reconstructed video data for a video coding system, wherein reconstructed video data is partitioned into image units, the method comprising:

receiving reconstructed video data for an image unit;
applying deblocking filter (DF) process to reconstructed pixels, and wherein DF processing modifies up to m pixels at each side of a horizontal edge corresponding to an image unit boundary between two image units;
applying sample adaptive offset (SAO) process to DF-processed pixels of current image unit according to one or more SAO parameters, wherein all or a part of pixels within SAO parameter boundary of current image unitshare same said one or more SAO parameters, and wherein a vertical SAO parameter boundary of current image unit is shifted-left by xs lines from a vertical boundary of current image unit, a horizontal SAO parameter boundary of current image unit is shifted-up by ys lines from a horizontal boundary of current image unit; and
applying spatial-loop-filter process to SAO-processed pixels above a spatial-loop-filterrestricted boundary of current image unit according to one or morespatial-loop-filter parameters, wherein the spatial-loop-filterrestricted boundary of current image unit is shifted-up by yv lines from a bottom boundary of current image unit; and
wherein m, xs, ys, and yv are positive integers, xs is always greater than m, ys is greater than or equal to 0, ys is always smaller than yv, and yvis determined according to m.

2. The method of Claim 1, wherein each image unit corresponds to a coding tree unit (CTU).

3. The method of Claim 1 or 2, wherein the spatial-loop-filter process corresponds to adaptive loop filter (ALF) process.

4. The method of any of the preceding claims, wherein the reconstructed video data comprises a luma component and a chroma component, and the DF process, the SAO process, and the spatial-loop-filter process are applied to the luma component and chroma component separately with individual m denoted as M and N, individual xs denoted as xS and xSC, individual ys denoted as yS and ySC, and individual yv denoted as yV and yVC respectively.

5. The method of Claim 4, wherein yS and ySC are equal to 0.

6. The method of Claim 4 or 5, wherein yV is greater than M and yVC is greater than N.

7. The method of any of Claims 4 to 6, wherein yV is equal to (M+1) and yVC is equal to (N+1).

8. The method of Claim 7, wherein M is equal to 3 and N is equal to 2.

9. The method of any of Claims 4 to 8, wherein yS is equal to ySC, yVis equal to yVC, and yVC is greater than MAX(M,N).

10. The method of Claim 9, wherein yV and yVC are equal to MAX(M,N)+1.

11. The method of Claim 10, wherein M is equal to 3 and N is equal to 2.

12. The method of any of the preceding Claims, further comprising storing sign data generated from comparing a current pixel in a current line processed during a current processing stage for the current image unit with a neighboring pixel in an adjacent line to be processed during in a subsequent processing stage, wherein each sign data corresponds to "greater than", "less than" or "equal to".

13. The method of any of the preceding claims, wherein each sign data is stored in 2 bits.

14. An apparatus for loop filter processing of reconstructed video data for a video coding system, wherein reconstructed video data is partitioned into coding tree units (CTUs), the apparatus comprising:

> one or more electronic circuits, wherein said one or more electronic circuits are coupled to a line buffer and said one or more electronic circuits are arranged to:

>> receive reconstructed video data for an image unit;
>> apply deblocking filter (DF) process to reconstructed pixels, and wherein DF processing modifies up to m pixels at each side of a horizontal edge corresponding to an image unit boundary between two image units;
>> apply sample adaptive offset (SAO) process to DF-processed pixels of current image unit according to one or more SAO parameters, wherein all or a part of pixels within SAO parameter boundary of current image unitshare same said one or more SAO parameters, and wherein a vertical SAO parameter boundary of current image unit are shifted-left by xs lines from a vertical boundary of current image unit, a horizontal SAO parameter boundary of current image unit are shifted-up by ys lines from a horizontal boundary of current image unit; and
>> apply spatial-loop-filter process to SAO-processed pixels above a spatial-loop-filterrestricted boundary of current image unit according to one or morespatial-loop-filter parameters, wherein the spatial-loop-filterrestricted boundary of current image unit is shifted-up by yv lines from a bottom boundary of current image unit; and
>> wherein m, xs, ys, and yv are positive integers, xs is always greater than m, ys is greater than or equal to 0, ys is always smaller than yv, and yvis determined according to m.

15. The apparatus of Claim 14, wherein each image unit corresponds to a coding tree unit (CTU), and/or the spatial-loop-filter process corresponds to an adaptive loop filter (ALF) process.

16. The apparatus of Claim 14 or 15, wherein the reconstructed video data comprises a luma component and a chroma component, and the DF process, the SAO process, and the spatial-loop-filter process are applied to the luma component and chroma component separately with individual m denoted as M and N, individual xs denoted as xS and xSC, individual ys denoted as yS and ySC, and individual yv denoted as yV and yVC respectively.

*Fig. 1A*

*Fig. 1B*

210

| $p_3$ | $p_2$ | $p_1$ | $p_0$ | $q_0$ | $q_1$ | $q_2$ | $q_3$ |

**Fig. 2A**

220

| $p_2$ | $p_1$ | $p_0$ | $q_0$ | $q_1$ | $q_2$ |

**Fig. 2B**

0°　　　　90°　　　　135°　　　　45°

**Fig. 3**

410

420

SAO Parameter of CTU X　CTU X　CTU Boundary

SAO Parameter of CTU Y　CTU Y

CTU Boundary　CTU X　SAO Parameter of CTU X

Shifted Parameter Boundary　CTU Y　SAO Parameter of CTU Y

**Shifted Pixel Number: xS**　**Shifted Pixel Number: yS**

**Fig. 4**

*Fig. 5*

*Fig. 6*

*Prior Art*

*Fig. 7*

825

835

845

822 824

M N 805

832 834

y$ y$C 805

842 844

A
B
C
D
E
F
G

yV yVC 805

**Prior Art**

**Fig. 8**

SAO operation with parameter of CTU X

SAO operation with parameter of **CTU X**

940 950

Deblocking Available Boundary after CTU X

930

A
B
C
D
E
F
G
H
I
J

**CTU X**

**CTU Y**

SAO processing Boundary

920

CTU Boundary

910

912

SAO Parameter Boundary

**Fig. 9**

*Fig. 10*

*Fig. 11*

Start

Receiving reconstructed video data for an image unit                          1210

Applying deblocking filter (DF) process to reconstructed pixels, and wherein DF processing modifies up to m pixels at each side of a  horizontal edge corresponding to an image unit boundary between two image units          1220

Applying sample adaptive offset (SAO) process to DF-processed pixels of current image unit according to one or more SAO parameters, wherein all or a part of pixels within SAO parameter boundary of current image unit share same said one or more SAO parameters, and wherein a vertical SAO parameter boundary of current image unit is shifted-left by xs lines from a vertical boundary of current image unit, a horizontal SAO parameter boundary of current image unit is shifted-up by ys lines from a horizontal boundary of current image unit          1230

Applying spatial-loop-filter process to SAO-processed pixels above a spatial-loop-filter restricted boundary of current image unit according to one or more spatial-loop-filter parameters, wherein the spatial-loop-filter restricted boundary of current image unit is shifted-up by yv lines from a bottom boundary of current image unit          1240

Setting loop filter related boundaries according to: m, xs, ys, and yv are positive integers, xs is always greater than m, ys is greater than or equal to 0, ys is always smaller than yv, and yv is determined according to m          1250

End

*Fig. 12*

Europäisches
Patentamt

European
Patent Office

Office européen
des brevets

# EUROPEAN SEARCH REPORT

Application Number

EP 16 15 5745

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ESENLIK S ET AL: "Grid displacements for in-loop filtering", 97. MPEG MEETING; 18-7-2011 - 22-7-2011; TORINO; (MOTION PICTURE EXPERT GROUP OR ISO/IEC JTC1/SC29/WG11),, no. m20691, 15 July 2011 (2011-07-15), XP030049254, | 1-4, 6-11, 14-16 | INV. H04N19/117 H04N19/14 H04N19/182 H04N19/82 H04N19/86 H04N19/423 |
| Y | * sections 2 and 3 * | 12,13 | |
| A | | 5 | |
| | ----- | | |
| Y | WO 2014/023207 A1 (MEDIATEK INC [CN]) 13 February 2014 (2014-02-13) * paragraph [0035] * * paragraph [0031] - paragraph [0032] * * paragraph [0037] * | 12,13 | |
| | ----- | | |
| Y | CHIH-MING FU ET AL: "Sample Adaptive Offset in the HEVC Standard", IEEE TRANSACTIONS ON CIRCUITS AND SYSTEMS FOR VIDEO TECHNOLOGY, IEEE SERVICE CENTER, PISCATAWAY, NJ, US, vol. 22, no. 12, 1 December 2012 (2012-12-01), pages 1755-1764, XP011487153, ISSN: 1051-8215, DOI: 10.1109/TCSVT.2012.2221529 * section V.A and V.C * | 12,13 | |
| | ----- | | |
| A | CHEN JIE ET AL: "Sample adaptive offset in AVS2 video standard", 2014 IEEE VISUAL COMMUNICATIONS AND IMAGE PROCESSING CONFERENCE, IEEE, 7 December 2014 (2014-12-07), pages 69-72, XP032741238, DOI: 10.1109/VCIP.2014.7051506 [retrieved on 2015-02-27] * section III * | 1-16 | |
| | ----- | | |
| | -/-- | | |

**TECHNICAL FIELDS SEARCHED (IPC)**

H04N

The present search report has been drawn up for all claims

| Place of search | Date of completion of the search | Examiner |
|---|---|---|
| The Hague | 9 June 2016 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 16 15 5745

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CHIA-YANG TSAI ET AL: "Adaptive Loop Filtering for Video Coding", IEEE JOURNAL OF SELECTED TOPICS IN SIGNAL PROCESSING, vol. 7, no. 6, 1 December 2013 (2013-12-01), pages 934-945, XP055265962, US ISSN: 1932-4553, DOI: 10.1109/JSTSP.2013.2271974 * section II.E * | 1-16 | |
| A | Gao ET AL: "Chapter 7 - In-Loop Filter" In: "Advanced Video Coding Systems", 1 January 2015 (2015-01-01), Springer, XP055278569, pages 115-134, * sections 7.2, 7.3 and 7.4 * | 1-16 | |
| A | ESENLIK S ET AL: "Grid displacements for ALF", 100. MPEG MEETING; 30-4-2012 - 4-5-2012; GENEVA; (MOTION PICTURE EXPERT GROUP OR ISO/IEC JTC1/SC29/WG11),, no. m24408, 28 April 2012 (2012-04-28), XP030052753, * sections 2-3 * | 1-16 | TECHNICAL FIELDS SEARCHED (IPC) |

-/--

The present search report has been drawn up for all claims

| Place of search | Date of completion of the search | Examiner |
|---|---|---|
| The Hague | 9 June 2016 | Ferré, Pierre |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | C-Y CHEN ET AL: "Non-CE8.c.7: Single-source SAO and ALF virtual boundary processing with cross9x9", 7. JCT-VC MEETING; 98. MPEG MEETING; 21-11-2011 - 30-11-2011; GENEVA; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-G212, 8 November 2011 (2011-11-08), XP030110196, * sections 2 and 3 * ----- | 1-16 | |

TECHNICAL FIELDS
SEARCHED      (IPC)

The present search report has been drawn up for all claims

| Place of search | Date of completion of the search | Examiner |
|---|---|---|
| The Hague | 9 June 2016 | Ferré, Pierre |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

................................................................

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 16 15 5745

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2016

| Patent document cited in search report | | Publication date | Patent family member(s) | | Publication date |
|---|---|---|---|---|---|
| WO 2014023207 | A1 | 13-02-2014 | CN | 104584561 A | 29-04-2015 |
| | | | EP | 2880856 A1 | 10-06-2015 |
| | | | US | 2014036991 A1 | 06-02-2014 |
| | | | WO | 2014023207 A1 | 13-02-2014 |

EPO FORM P0459

For more details about this annex : see Official Journal of the European Patent Office, No. 12/82

**EP 3 057 320 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62115755 A